# EUROPÄISCHE PATENTSCHRIFT

(11) **EP 1 495 669 B1**
(45) Veröffentlichungstag und Bekanntmachung des Hinweises auf die Patenterteilung: **06.04.2011**
(21) Anmeldenummer: 04014561.7
(22) Anmeldetag: 22.06.2004
(51) Int. Cl.: A01F 15/04

(54) **Ballenpresse**
Baling press
Presse à balles

(30) Priorität: 05.07.2003 DE 10330502
(43) Veröffentlichungstag der Anmeldung: 12.01.2005
(73) Patentinhaber: Welger Maschinenfabrik GmbH, 38304 Wolfenbüttel (DE)
(72) Erfinder: Schlichting, Malte, 38302 Wolfenbüttel (DE)

(56) Entgegenhaltungen:
- EP-A- 0 655 190
- FR-A- 2 143 033
- GB-A- 2 145 968
- US-A- 5 913 801

## Beschreibung

Die Erfindung betrifft eine Ballenpresse, deren Presskolben im Presskanal geführt ist, wobei die Ballenpresse eine Überwachungseinrichtung für mindestens eine der Führungen des Presskolbens oder den Presskolben selbst aufweist.

Eine derartige Ballenpresse ist beispielsweise durch die EP-A-0 655 190 bekannt. Die Überwachungseinrichtung für den Presskolben weist eine Sensoreinrichtung für die Verdichtungskräfte auf, die während des Presshubes vom Presskolben auf das zu pressende Material ausgeübt werden. Die Signale der Sensoreinrichtung werden zur automatischen Regelung der Presskanal- Spannschienen verwendet, um die Ballendichte in Abhängigkeit von der gemessenen Presskolbenkraft zu steuern. Auf diese Art und Weise können zwar die Presskolbenkräfte in definierten Grenzen gehalten werden, kritische Maschinenzustände, die beispielsweise aufgrund Ausfalls von Bauteilen entstehen können, werden aber nicht angezeigt.

Der Presskolben und insbesondere dessen Laufrollen sind während des Press- und Schneidvorganges sehr großen Belastungen ausgesetzt. Blockierende Laufrollen können zu schwerwiegenden Schäden und teuren Ausfällen der Ballenpresse führen.Zu Blockierungen der Laufrollen kann es beispielsweise durch mangelhafte Schmierung oder Ausfall der Zentralschmieranlage kommen. Weitere Ursachen können Verschmutzungen oder Abnutzung der Laufrollen oder zu großes Spiel zwischen Laufrolle und Führungsschiene sein, das dazu führt, dass der Presskolben kippelt und Dellen in die Führungsschienen schlägt oder die Laufflächen der Laufrollen beschädigt. Vorgenannte Ursachen führen dazu, dass der Presskolben absackt und das presskolbenseitige Schneidmesser und das gestellseitige Schneidmesser aufeinanderschlagen und zerstört werden. Große Beschädigungen an Presskanal und Presskolben sind die Folgen. Im schlimmsten Fall können blockierende, sich erhitzende Laufrollen zu Funkenflug führen und einen Maschinenbrand verursachen.

Durch die DE 35 35 428 A1 ist es bereits bekannt, landwirtschaftliche Erntemaschinen mit einer Anzeigevorrichtung der kritischen Temperaturen von Lagern zu versehen. Hier soll beispielsweise ein Temperaturindikatorstreifen auf dem Lager befestigt sein. Bei der Durchsicht der Erntemaschine kann der Fahrer im Stillstand der Maschine dann sehen, ob ein Lager heißgelaufen ist. Die Einrichtung ist in der Praxis nicht bekanntgeworden, weil diese kein direktes Signal an den Fahrer sendet, sondern nur indirekt und zeitversetzt kritische Zustände erkennen lässt. Darüber hinaus ist eine Temperaturanzeige nachteilig, weil es je nach Bauteil relativ lange dauert, bis bestimmte Schwellwerte erreicht werden, bei deren Überschreiten ein Signal erfolgt.

Eine kürzere Reaktionszeit soll die in der DE 102 38 900 A1 vorgeschlagene Einrichtung ermöglichen. Hierbei soll nicht die Temperatur, sondern der Temperaturanstieg der Gleitleisten eines Pressenstößels gemessen und angezeigt werden.

Für einen durch Laufrollen geführten Presskolben ist auch diese Überwachungseinrichtung ungeeignet, weil diese aufwendige Temperaturfühler erforderlich macht, die relativ träge arbeiten und kritische Temperaturen, die durch das Reiben blockierender Laufrollen auf den Führungsschienen entstehen, viel zu spät erkannt würden.

Der Erfindung liegt ausgehend von der eingangs beschriebenen Ballenpresse die Aufgabe zugrunde, eine Einrichtung zu schaffen, mit der kritische Zustände der Presskolbenführungen frühest möglich einfach und zuverlässig erkannt und Folgeschäden vermieden werden. Diese Aufgabe wird durch die im kennzeichnenden Teil des Patentanspruches 1 aufgeführten Merkmale gelöst. Hinsichtlich der weiteren Ausgestaltung der Erfindung wird auf die Ansprüche 2 bis 11 verwiesen.

Erfindungsgemäß ist erstmals bei einer Ballenpresse mit durch Laufrollen geführtem Presskolben eine Überwachungseinrichtung vorgesehen, welche kritische Zustände z.B. durch blockierende Laufrollen frühestmöglich erkennen lässt und Folgeschäden am Presskolben und/oder am Presskanal vermeidet. Bei der erfindungsgemäßen Ballenpresse erfolgt zukünftig eine Kontrolle, ob die Laufrollen einwandfrei arbeiten. Darüber hinaus ist erkennbar, wenn die Laufrollen mit großem Schlupf auf den Laufschienen gleiten, d.h. Störungen werden auch schon in der Entstehungsphase erkannt.

Um den Verschleiß von Laufrollen und/oder Führungsschienen rechtzeitig automatisch zu erkennen, und ein rechtzeitiges Nachstellen der Führungen zu ermöglichen, schlägt die Erfindung weiter vor, dass zwischen Presskolben und Presskanal ein Wegaufnehmer angeordnet ist, der den Abstand zwischen Presskolben und Presskanal in vertikaler Richtung misst, welcher ein Maß für den Verschleiß von Laufrolle und/oder Führungsschiene darstellt.

In weierer Ausgestaltung ist vorgesehen, dass die Signalleitungen der Sensoren zu einem Bündel an einem kolbenfesten Punkt zusammengeführt und während der Hin- und Herbewegung des Presskolbens mittels eines Führungselementes gelenkt werden, das einerseits beweglich am Presskanal angeordnet ist und andererseits über ein Verbindungselement mit dem Presskolben gekuppelt ist, so dass dieses durch den Presskolben mitgenommen wird. Hierdurch wird eine einfache und kostengünstige Konstruktion ohne komplexe Mechanismen erreicht, die keinen Wartungs- und Instandhaltungsaufwand erfordert.

Grundsätzlich ist es auch möglich, die Sensorsignale durch entsprechende Fernkommunikationssysteme aus der Ferne abzufragen oder beispielsweise in zeitlichen Abständen eine SMS an eine Servicezentrale und/oder den Betreiber der Maschine zu versenden.

In der Zeichnung ist eine als Beispiel dienende Ausführungsform der Erfindung schematisch dargestellt. Es zeigen:
- Fig. 1: in Seitenansicht einen Presskanal mit Presskolben und eine Laufrollensensorik als Teil einer erfindungsgemäßen Überwachungseinrichtung,
- Fig. 2: eine Draufsicht auf Fig.1 mit einem Führungselement für die Signalleitungen der Sensoren und
- Fig. 3: ein Blockschaltbild der Erfindung.

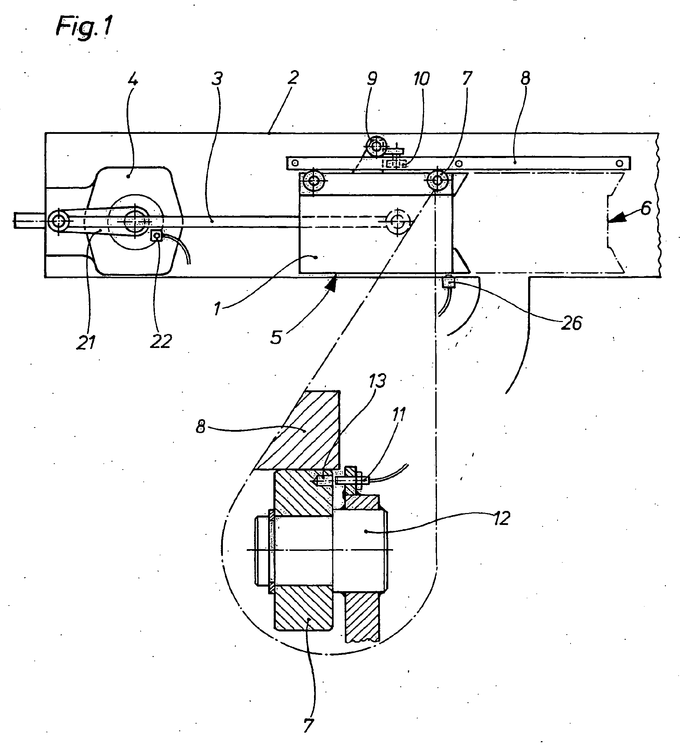

Hinsichtlich des Aufbaues und der Wirkungsweise einer vorbekannten Ballenpresse kann z.B. auf die deutsche Offenlegungsschrift Nr. 3021506 verwiesen werden. Von einer derartigen Ballenpresse zeigt Fig. 1 lediglich einen Presskolben 1, welcher in einem Presskanal 2 gelagert ist und über einen Kurbeltrieb 3 von einem Hauptgetriebe 4 aus antreibbar ist, so dass der Presskolben 1 zwischen seiner vorderen, mit Volllinie gezeichneten Endstellung 5 und seiner hinteren, in Strichpunktlinie gezeichneten Stellung 6 hin und her fährt. Der Presskolben 2 weist an seiner Oberkante auf beiden Seiten Laufrollen 7 auf, die mit am Presskanal 2 befestigten Führungsschienen 8 zusammenwirken und den Presskolben 1 führen. Insgesamt sind acht Laufrollen 7, 9, 10 vorgesehen, von denen vier Laufrollen 7 unterhalb der Führungsschienen 8 und zwei Laufrollen 9 oberhalb der Führungsschienen 8 angeordnet sind und den Presskolben 1 in der Höhe führen. Zwei weitere obere Laufrollen 10 dienen der seitlichen Führung des Presskolben 1.

Jede der Laufrollen 7, 9, 10 ist mit je einem Sensor versehen, der in diesem Beispiel als induktiver Sensor 11 zur Drehzahlerfassung ausgebildet ist. Übersichtshalber ist nur ein Sensor 11 an einer Laufrolle 7 gezeichnet. Der vergrößerten Darstellung einer Laufrolle 7 in Fig. 1 ist ersichtlich, dass der Sensor 11 am Lagerbolzen 12 der Laufrolle 7 befestigt und damit ortsfest am Presskolben 1 angeordnet ist. Die Laufrolle 7 ist in diesem Beispiel vereinfacht ohne Wälz- oder Gleitlager gezeichnet. Die Schaltfahne des Sensors 11 wird in diesem Beispiel von mindestens einer in der Laufrolle 7 angeordneten Bohrung 13 gebildet, die so angeordnet und ausgebildet ist, dass der Sensor 11 bei jeder Laufrollenumdrehung wenigstens einmal schaltet, d.h. er sieht einmal kein Metall und ist "unbedämpft". Es ist alternativ auch möglich, nur die oberen zwei Laufrollen 9 mit jeweils einem Sensor 11 zu versehen, da diese bei Blockierungen ein Absinken des Presskolbens 1 verursachen und damit zur Messerkollision führen.

Zur genaueren Drehzahlauswertung einer Laufrolle 7, 9, 10 können auch mehrere, in Umfangsrichtung der Laufrolle 7, 9, 10 versetzte Bohrungen 13, z.B. vier vorgesehen sein, so dass der Sensor 11 entsprechend der Bohrungsanzahl mehrfach pro Umdrehung schaltet. Die Auswertung kann auch derart erfolgen, dass man eine Sinuskurve vorgibt, auf der ein oder mehrere Laufrollenpunkte bei schlupflosem Lauf abrollen. Durch Abweichungsanalyse der gemessenen Ist-Werte der Laufrolle mit dem Sollverlauf kann auch schon geringer Schlupf festgestellt werden.

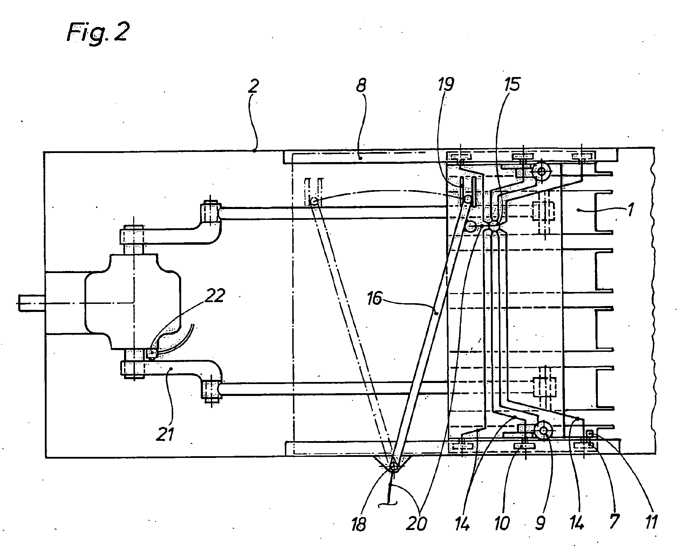

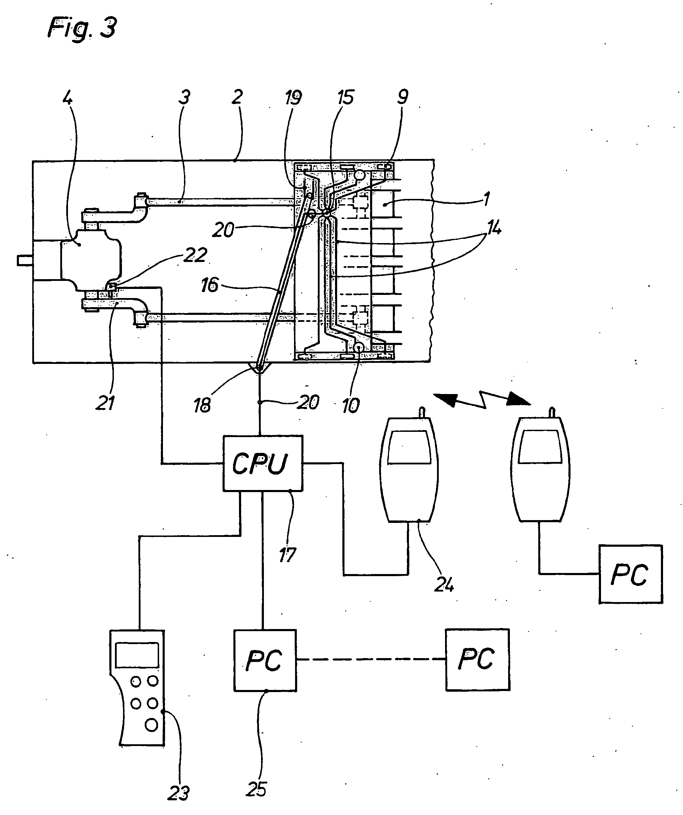

Wie aus Fig. 3 ersichtlich, sind die Signalleitungen 14 der Sensoren aller Laufrollen 7, 9, 10 an einem kolbenfesten Punkt 15 zusammengeführt und von dort aus über ein Führungselement 16 zu einem Mikrocontroller geführt, der allgemein mit der Zahl 17 gekennzeichnet ist. Die Signalkabelführung ist am besten aus Fig. 2 ersichtlich und besteht im wesentlichen aus dem Führungselement 16, das ein am Presskanal 2 um eine vertikale Achse 18 drehbar gelagerter Schwenkarm ist, der mit seinem gegenüberliegenden Ende bis zum Bündelpunkt 15 der Signalleitungen 14 reicht und dort über eine Kulissenstein-Langlochführung 19 mit dem Presskolben 1 gekuppelt ist, so dass der Schwenkarm während der hin und her gehenden Presskolbenbewegung ständig mit dem Presskolben 1 mitgezogen wird. Der Schwenkarm fährt dabei zwischen der in Fig. 2 in Volllinie gezeichneten Stellung und der in Strichpunktlinie gezeichneten Stellung hin und her. Das Signalleitungsbündel 20 ist entweder am Schwenkarm befestigt oder beispielsweise durch ein Schwenkrohr hindurch geführt, wodurch eine sichere Kabelführung von dem sich ständig bewegenden Presskolben 1 auf den gestellfesten Presskanal 2 und zum Mikrorechner 17 auf einfache Art und Weise dauerhaft gewährleistet ist.

Zur Drehzahlerfassung des Kurbelarmes 21 ist ebenfalls ein induktiver Sensor 22 am Hauptgetriebe 4 befestigt, der bei jedem vollen Hin- und Hergang des Presskolbens 1 einmal "unbedämpft" ist, also pro Kolbenhub einmal schaltet.

Nachstehend ist beispielhaft eine Ausführungsform der Überwachungseinrichtung der Laufrollen 7, 9, 10 beschrieben:

Die Überwachungseinrichtung besteht im Wesentlichen aus den Sensoren 7, 9, 10, einem Mikrocontroller 17 als Auswerteeinrichtung und einer Anzeigeeinrichtung 23, 24, 25. Der Mikrocontroller 17 hat neun Eingangsgrößen :
Acht Eingangsgrößen kommen von den Laufrollensensoren 7, 9, 10 und die neunte vom Kurbelarmsensor 22. Darüber hinaus steht der Mikrocontroller 17 mit einem Bediengerät 23 in Wirkverbindung, das ein Display als Anzeigeeinrichtung und ein Bedienfeld aufweist. Zur Datenfernübertragung kann der Mikrocontroller 17 über geeignete Kommunikationsmodule mit einem Handy 24 oder beispielsweise einem PC 25 gekoppelt werden. Darüber hinaus können weitere Eingangsgrößen, wie z. B. die Laufschienentemperaturen über einen Temperatursensor zur Auswertung herangezogen werden.

Die Arbeitsweise ist wie folgt:

Bei schlupflosem Abrollen der Laufrollen 7, 9, 10 auf den Führungsschienen 8 haben diese eine Drehzahl, die sich leicht aus der Hubzahl des Presskolbens 1 und dem Laufrollendurchmesser ermitteln lässt. Um ein zu feines Reagieren der Überwachungseinrichtung zu vermeiden und aufgrund des zeitweiligen Stillstandes der Laufrollen 7, 9, 10 in den beiden Endlagen 5, 6 des Presskolbens 1, bestimmt man eine "Schwelldrehzahl" der Laufrollen 7, 9, 10, die in Relation zum Takt des Presskolbens 1 gesetzt wird, der vom Sensor 22 erfasst wird. Im vorgenannten Beispiel sei die Sollvorgabe für ein Alarmsignal an das Bediengerät 23 beispielsweise derart, dass eine Warnanzeige an den Bediener erfolgen soll, wenn wenigstens einer der acht Sensoren 11 der Laufrollen 7, 9, 10 kein Signal innerhalb von zwei Presskolbenhüben kein Signal an den Mikrocontroller 17 gegeben hat. Das lässt auf Stillstand der betreffenden Laufrolle schließen. Alternativ kann die Sollvorgabe sein: Gebe ein Warnsignal, wenn innerhalb von vier Kurbelarmsignalen nicht wenigstens eine Laufrolle x-30% Signale gesendet hat, wobei x die Anzahl der Signale bei schlupflosem Abrollen der Laufrolle 7, 9, 10 auf der Führungsschiene 8 ist. Der Mikrocontroller 17 zählt jeweils die Impulse von den Sensoren 11, 22 oder ermittelt aus der Periodendauer (zeitlicher Abstand der Bedämpfungen) die Eingangsfrequenzen und vergleicht diese mit Sollwerten. Beim Unterschreiten der Istdrehzahl erfolgen Warnmeldungen, bei Stillstand der Laufrolle Alarmmeldungen zusätzlich per Fernübertragung an z. B. eine Servicezentrale.

Wesentlich ist auch, dass durch die einzelne Auswertung der Drehzahl jeder Laufrolle 7, 9, 10 leicht feststellbar und insbesondere auf dem Bediengerät 23 durch geeignete Symbole anzeigbar ist, welche der Laufrollen 7, 9, 10 betroffen ist/sind.

Grundsätzlich ist auch eine Arbeitsweise der vorgenannten Einrichtung ohne Sensor 22 zur Messung der Kurbelarmdrehzahl möglich. Zur Auswertung wird dann beispielsweise der Taktgeber des Mikrocontrollers 17 herangezogen.

Eine weitere Alternative besteht darin, statt eines Microcontrollers Sensoren mit integrierter Auswerteeinrichtung zu verwenden, die direkt mit einer geeigneten Anzeigevorrichtung in Wirkverbindung stehen.

Im Rahmen der Erfindung können auch nicht dargestellte elektronische Digital-Tachometer zur Anwendung kommen, die jeder Laufrolle 7, 9, 10 zugeordnet werden. Bei Unterschreiten einer definierten Drehzahl (Impulsfrequenz) erfolgt dann eine Signalausgabe.

Um den Verschleiß der Laufrollen 7, 9, 10 und/oder der Führungsschienen 8 zu signalisieren, ist im Rahmen der Erfindung ein Sensor 26 vorgesehen, der den vertikalen Abstand zwischen Presskolben 1 und Presskanal 2 in vertikaler Richtung misst. Der Abstand wird beispielsweise durch einen induktiven Näherungsschalter gemessen. Durch Vergleich mit einem Sollabstand wird die Abweichung ermittelt. Bei zu großer Abweichung erfolgt eine Warnmeldung an den Fahrer über das Bediengerät 23. Der Fahrer stellt daraufhin die Laufrollen 7, 9, 10 bzw. die Führungsschienen 8 nach, so dass Betriebsstörungen und Laufrollen- sowie Führungsschienenbeschädigungen vermieden werden.

Insgesamt bewirkt die Ausgestaltung der Ballenpresse mit der erfindungsgemäßen Überwachungseinrichtung 11, 22, 17, 23, 24, 25 eine vorbeugende Schadensverhütung, die wegen der kurzen Einsatzzeit insbesondere landwirtschaftlicher Ballenpressen von großem Vorteil ist, der den Mehraufwand für die Überwachungseinrichtung übersteigt.

## Patentansprüche

1. Ballenpresse, deren Presskolben (1) im Presskanal (2) geführt ist, wobei die Ballenpresse eine Überwachungseinrichtung (11, 17, 23, 26) für mindestens eine der Führungen des Presskolbens (1) oder den Presskolben (1) selbst aufweist, **dadurch gekennzeichnet, dass** der Presskolben (1) durch Laufrollen (7, 9, 10) auf Führungsschienen (8) an den Presskanalwänden geführt ist , wobei die Überwachungseinrichtung (11, 17, 23, 26) wenigstens einen Sensor (11) umfasst, mit dem feststellbar ist, wenn eine oder mehrere Laufrollen (7, 9, 10) während des Betriebes nicht dreht/drehen oder relativ zum Presskolbenzyklus zu langsam dreht/drehen.

2. Ballenpresse nach Anspruch 1, **dadurch gekennzeichnet, dass** die Überwachungseinrichtung (11, 17, 23, 26) wenigstens eine Sensorik für eine oder mehrere gestellfest angeordnete Laufschienen (8) umfasst.

3. Ballenpresse nach Anspruch 1 oder 2, **dadurch gekennzeichnet, dass** die Drehzahl einer oder mehrerer Laufrollen (7, 9, 10) durch jeweils einen einzelnen Drehzahlsensor (11) gemessen wird und ein Signal erfolgt, wenn keine Drehung oder eine zu langsame Drehung innerhalb eines Presskolbenhubes oder nach mehreren, vorbestimmbaren Hubzahlen erfolgt.

4. Ballenpresse nach einem der vorhergehenden Ansprüche, **dadurch gekennzeichnet, dass** jede Laufrolle (7, 9, 10) einzeln ausgewertet wird und in der Anzeigeeinrichtung (23, 24, 25) erkennbar ist, welche der Laufrollen (7, 9, 10) nicht einwandfrei arbeitet/arbeiten.

5. Ballenpresse nach einem oder mehreren der vorhergehenden Ansprüche, **dadurch gekennzeichnet, dass** die Sensorik zur Erfassung der Laufrollendrehzahl einen elektronischen Digital-Tachometer mit einstellbaren Grenzwerten aufweist.

6. Ballenpresse nach einem oder mehreren der vorhergehenden Ansprüche, **dadurch gekennzeichnet, dass** zwischen Presskolben (1) und Presskanal (2) ein Wegaufnehmer (26) angeordnet ist, der den Abstand zwischen Presskolben (1) und Presskanal (2) in vertikaler Richtung misst, welcher ein Maß für den Verschleiß von Laufrolle (7, 9,10) und/oder Führungsschiene (8) darstellt.

7. Ballenpresse nach einem oder mehreren der vorhergegebenen Ansprüche, **dadurch gekennzeichnet, dass** zumindest eine Sensorik in eine Laufrolle (7, 9,10) und insbesondere in deren Wälz- oder Gleitlager integriert ist.

8. Ballenpresse nach einem oder mehreren der vorhergehenden Ansprüche, **dadurch gekennzeichnet, dass** wenigstens die oberen Laufrollen (9), die den Presskolben (1) tragen, jeweils eine Sensorik aufweisen.

9. Ballenpresse nach einem oder mehreren der vorhergehenden Ansprüche, **dadurch gekennzeichnet, dass** die Signale der Sensoren (11) für die Laufrollen (7, 9, 10) und/oder für die Führungsschienen (8) zeitabhängig oder in Abhängigkeit vom Kolbenzyklus ausgewertet und angezeigt werden.

10. Ballenpresse nach einem oder mehreren der vorhergehenden Ansprüche, **dadurch gekennzeichnet, dass** die Signalleitungen (14) der Sensoren (11) zu einem Bündel an einem kolbenfesten Punkt (15) zusammengeführt und während der Hin- und Herbewegung des Presskolbens (1) mittels eines Führungselementes (16) gelenkt werden, das einerseits beweglich am Presskanal (2) angeordnet ist und andererseits über ein Verbindungselement (19) mit dem Presskolben (1) gekuppelt ist, so dass dieses durch den Presskolben (1) mitgenommen wird.

11. Ballenpresse nach einem oder mehreren der vorhergehenden Ansprüche, **dadurch gekennzeichnet, dass** die Überwachungseinrichtung (11, 22, 17, 26) geeignete Mittel (24, 25) zur Datenfernübertragung aufweist.

## Claims

1. A baler, the baling ram (1) of which is guided in the baling channel (2), the baler having a monitoring means (11, 17, 23, 26) for at least one of the guides of the baling ram (1) or the baling ram (1) itself, **characterised in that** the baling ram (1) is guided by rollers (7, 9, 10) on guide rails (8) on the baling-channel walls, the monitoring means (11, 17, 23, 26) comprising at least one sensor (11) with which it can be determined if one or more rollers (7, 9, 10) is/are not rotating or is/are rotating too slowly relative to the baling-ram cycle during operation.

2. A baler according to Claim 1, **characterised in that** the monitoring means (11, 17, 23, 26) comprises at least one sensor system for one or more frame-mounted running rails (8).

3. A baler according to Claim 1 or 2, **characterised in that** the speed of rotation of one or more rollers (7, 9, 10) is measured by one individual speed sensor (11) in each case and a signal is emitted if no rotation or an excessively slow rotation takes place within a baling-ram stroke or after a plurality of numbers of strokes which can be predetermined.

4. A baler according to one of the preceding claims, **characterised in that** each roller (7, 9, 10) is evaluated individually and it can be recognised in the display means (23, 24, 25) which of the rollers (7, 9, 10) is/are not working perfectly satisfactorily.

5. A baler according to one or more of the preceding claims, **characterised in that** the sensor system has an electronic digital tachometer with adjustable limit values for detecting the speed of rotation of the rollers.

6. A baler according to one or more of the preceding claims, **characterised in that** a displacement sensor (26) is arranged between the baling ram (1) and baling channel (2), which sensor measures the distance between the baling ram (1) and baling channel (2) in the vertical direction, which distance represents a measurement of the wear of the roller (7, 9, 10) and/or guide rail (8).

7. A baler according to one or more of the aforementioned claims, **characterised in that** at least one sensor system is integrated in a roller (7, 9, 10), and in particular in the rolling bearing or sliding bearing thereof.

8. A baler according to one or more of the preceding claims, **characterised in that** at least the upper rollers (9), which bear the baling ram (1), each have a sensor system.

9. A baler according to one or more of the preceding claims, **characterised in that** the signals of the sensors (11) for the rollers (7, 9, 10) and/or for the guide rails (8) are evaluated and displayed dependent on time or dependent on ram cycle.

10. A baler according to one or more of the preceding claims, **characterised in that** the signal lines (14) of the sensors (11) are brought together to form a bundle at a point (15) fixed on the ram and during the back-and-forth movement of the baling ram (1) are guided by means of a guide element (16) which on one hand is arranged movably on the baling channel (2) and on the other hand is coupled to the baling ram (1) via a connecting element (19), so that said guide element is entrained by the baling ram (1).

11. A baler according to one or more of the preceding claims, **characterised in that** the monitoring means (11, 22, 17, 26) has suitable means (24, 25) for remote data transmission.

## Revendications

1. Presse à balles, dont le piston plongeur (1) est guidé dans le canal de pressage (2), la presse à balles présentant un dispositif de surveillance (11, 17, 23, 26) pour au moins l'un des guidages du piston plongeur (1) ou pour le piston plongeur (1) lui-même, **caractérisée en ce que** le piston plongeur (1) est guidé par des galets de roulement (7, 9, 10) sur des rails de guidage (8) au niveau des parois du canal de pressage, le dispositif de surveillance (11, 17, 23, 26) comprenant au moins un capteur (11) permettant de déterminer si un ou plusieurs galets de roulement (7, 9, 10) ne tourne(nt) pas pendant le fonctionnement ou tourne(nt) trop lentement par rapport au cycle du piston plongeur.

2. Presse à balles selon la revendication 1, **caractérisée en ce que** le dispositif de surveillance (11, 17, 23, 26) comprend au moins un système de capteurs pour une ou plusieurs rails de guidage (8) disposés fixement.

3. Presse à balles selon la revendication 1 ou 2, **caractérisée en ce que** la vitesse d'un ou plusieurs galets de roulement (7, 9, 10) est mesurée respectivement par un capteur de vitesse (11) individuel et **en ce qu'**un signal est émis lorsqu'aucune rotation ou une rotation trop lente se produit pendant une course du piston plongeur ou après plusieurs nombres de courses prédéterminables.

4. Presse à balles selon l'une des revendications précédentes, **caractérisée en ce que** chaque galet (7, 9, 10) est évalué individuellement et **en ce qu'**il est possible d'identifier dans le dispositif d'affichage (23, 24, 25) lequel/lesquels des galets de roulement (7, 9, 10) ne fonctionne(nt) pas parfaitement.

5. Presse à balles selon l'une des revendications précédentes, **caractérisée en ce que** le système de capteurs présente un tachymètre numérique électronique à valeurs limites réglables pour détecter la vitesse des galets de roulement.

6. Presse à balles selon l'une ou plusieurs des revendications précédentes, **caractérisée en ce qu'**est disposé, entre le piston plongeur (1) et le canal de pressage (2), un capteur de déplacement (26) qui mesure la distance entre le piston plongeur (1) et le canal de pressage (2) en direction verticale, laquelle distance représente une cote pour l'usure d'un galet de roulement (7, 9, 10) et/ou d'un rail de guidage (8).

7. Presse à balles selon l'une ou plusieurs des revendications précédentes, **caractérisée en ce qu'**au moins un système de capteurs est intégré dans un galet de roulement (7, 9, 10) et, en particulier, dans son palier à roulement ou son palier lisse.

8. Presse à balles selon l'une ou plusieurs des revendications précédentes, **caractérisée en ce qu'**au moins les galets de roulement supérieurs (9) portant le piston plongeur (1) présentent chacun un système de capteurs.

9. Presse à balles selon l'une ou plusieurs des revendications précédentes, **caractérisée en ce que** les signaux des capteurs (11) des galets de roulement (7, 9, 10) et/ou des rails de guidage (8) sont évalués en fonction du temps ou en fonction du cycle du piston et affichés.

10. Presse à balles selon l'une ou plusieurs des revendications précédentes, **caractérisée en ce que** les lignes de signaux (14) des capteurs (11) sont regroupées en un faisceau en un point (15) solidaire du piston et sont guidées, pendant le mouvement de va-et-vient du piston plongeur (1), au moyen d'un élément de guidage (16) qui, d'une part, est monté mobile sur le canal de pressage (2) et, d'autre part, est couplé au piston plongeur (1) par l'intermédiaire d'un élément de liaison (19) de façon que celui-ci soit entraîné par le piston plongeur (1).

11. Presse à balles selon l'une ou plusieurs des revendications précédentes, **caractérisée en ce que** le dispositif de surveillance (11, 22, 17, 26) présente des moyens appropriés (24, 25) pour la télétransmission de données.
